(19) Europäisches Patentamt
European Patent Office
Office européen des brevets

(11) **EP 4 541 192 A2**

(12) **DEMANDE DE BREVET EUROPEEN**

(43) Date de publication:
**23.04.2025 Bulletin 2025/17**

(21) Numéro de dépôt: **25161649.6**

(22) Date de dépôt: **26.07.2018**

(51) Classification Internationale des Brevets (IPC):
***A01P 21/00*** *(2006.01)*

(52) Classification Coopérative des Brevets (CPC):
(C-Sets disponibles)
**A01N 45/00** (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.08.2017 FR 1757557**
**07.08.2017 FR 1757558**

(62) Numéro(s) de document de la (des) demande(s) initiale(s) en application de l'article 76 CBE:
**18755875.4 / 3 664 612**

(71) Demandeur: **Elicit Plant**
**16220 Moulins-sur-Tardoire (FR)**

(72) Inventeurs:
• **FREGONESE, Alexandra**
**47310 MONCAUT (FR)**
• **NAVARRO, Marie**
**47220 MARMONT PACHAS (FR)**
• **EVEILLARD, Alexandre**
**47310 MOIRAX (FR)**
• **GOULAY, Olivier**
**69005 LYON (FR)**
• **HISETTE JOURDAINNE, Marie-Laure**
**67370 STUTZHEIM-OFFENHEIM (FR)**
• **MOLIN, Aymeric**
**16220 MOULINS-SUR-TARDOIRE (FR)**

(74) Mandataire: **Cabinet Laurent & Charras**
**Le Contemporain**
**50 Chemin de la Bruyère**
**69574 Dardilly Cedex (FR)**

Remarques:
Cette demande a été déposée le 04-03-2025 comme demande divisionnaire de la demande mentionnée sous le code INID 62.

(54) **COMPOSITION A BASE DE POLYOL(S) ET DE STEROL(S) POUR USAGE DANS LE DOMAINE AGRICOLE**

(57)     La présente invention concerne l'utilisation d'au moins un tensioactif non ionique dérivé de polyols et d'au moins un stérol, en tant qu'adjuvant d'une solution contenant un produit actif vis-à-vis de la plante ; ainsi qu'une solution pour application d'un produit actif vis-à-vis de la plante comprenant en outre au moins un tensioactif non ionique dérivé de polyols et au moins un stérol.

EP 4 541 192 A2

(52) Classification Coopérative des Brevets (CPC):
(Cont.)

C-Sets
**A01N 45/00, A01N 43/16**

**Description**

Au cours de leur évolution, les végétaux ont mis en place des barrières mécaniques protectrices (cuticule, paroi pectocellulosique), notamment contre les bioagresseurs.

Ces barrières leur confèrent une résistance constitutive, notamment face aux agents pathogènes. En cas de franchissement de ces barrières mécaniques, les plantes ont su développer des mécanismes de défense active comme la résistance systémique acquise (SAR). La SAR est certes moins intense ou active que l'application d'un produit phytosanitaire mais elle est durable : la plante est préparée à une nouvelle attaque du pathogène ou d'un autre agresseur et pourra y répondre plus rapidement.

En d'autres termes, les plantes disposent de moyens intrinsèques pour se défendre.

Renforcer leurs propres moyens de défense en réponse à un stress biotique plutôt que de combattre directement l'agresseur au moyen de produits phytosanitaires constitue une solution intéressante sur les plans scientifique et agronomique. On trouve comme stimulateurs des moyens de défense, les stimulateurs des défenses naturelles des plantes (SDN), que l'on désigne également éliciteurs.

Au sens de l'invention, par « stress biotique », on désigne un stress qui provient d'organismes vivant tel des microorganismes pathogènes par exemple des champignons, des bactéries, des virus, mais encore des nématodes, des insectes, des acariens, des herbivores, ou des plantes parasites.

Au sens de l'invention, par « éliciteur », on désigne une substance qui est reconnue par les plantes et active une cascade de signalisation qui conduit la plante à mobiliser ses moyens de défense. Un éliciteur est une substance capable, dans certaines conditions, de stimuler des mécanismes de défense naturelle. Ces défenses naturelles sont dirigées contre des bioagresseurs (maladies, ravageurs).

On sait également rendre les plantes plus résistantes face à des stress abiotiques, par utilisation d'un biostimulant.

Au sens de l'invention, par « stress abiotique », on désigne un stress qui résulte du non vivant tel un stress hydrique, un stress salin, un stress inondation (« flooding »), le vent (verse), un stress thermique (froid, gel, choc thermique), un stress dû aux ultraviolets (rayonnement solaire), un stress lié aux carences nutritives, un stress blessure, un stress oxydatif, un stress osmotique, un stress chimique.

Dans le cadre de la présente invention le terme de biostimulant ou biostimulant végétal est défini conformément à l'étude commanditée par le Centre d'Études et de Prospective du Ministère de l'Agriculture, de l'Agroalimentaire et de la Forêt (MAAF) et financée par le MAAF dans le cadre du programme 215 (Marché n° SSP-2013-094, Rapport final - décembre 2014) intitulée « Produits de stimulation en agriculture visant à améliorer les fonctionnalités biologiques des sols et des plantes - Étude des connaissances disponibles et recommandations stratégiques».

Un biostimulant est : « Un matériel qui contient une (des) substance(s) et/ou micro-organisme(s) dont la fonction, quand appliqué aux plantes ou à la rhizosphère, est de stimuler les processus naturels pour améliorer/avantager l'absorption des nutriments, l'efficience des nutriments, la tolérance aux stress abiotiques, et la qualité des cultures, indépendamment du contenu en nutriments du biostimulant. ». (EBIC, 2014).

A titre d'exemple, des biostimulants actuellement mis en œuvre sont des micro-organismes, des extraits de plantes ou encore des composés chimiques de synthèse. Toutefois, l'efficacité de ces biostimulants n'est pas optimale.

En parallèle, l'agriculture contemporaine a un besoin de plus en plus grand de protéger ses cultures et ses récoltes si elle veut maintenir ses hauts rendements et ses marges déjà faibles dans certaines productions.

La mauvaise image des pesticides dans le public (en témoigne l'actuelle campagne de communication menée par l'Union des Industries pour la Protection des Plantes - UIPP) pose des problèmes. Par ailleurs, l'efficacité des produits phytosanitaires tend à diminuer. En effet, comme dans le cas des antibiotiques utilisés en médecine humaine, des résistances apparaissent et les rendent moins, voire inefficaces. Pour l'ensemble de ces raisons, il est nécessaire de limiter au maximum leur utilisation en optimisant au mieux leurs effets.

Le premier problème que se propose de résoudre l'invention est donc celui de mettre au point des compositions qui contribuent à la biostimulation des plantes.

Par conséquent, l'objectif est celui de mettre au point des compositions alternatives qui soient capables de favoriser la résistance des plantes au regard d'un stress abiotique de façon plus efficace que les composés de l'art antérieur.

En d'autres termes, l'objectif est celui de stimuler certains mécanismes naturels pour améliorer /avantager l'absorption des nutriments, l'efficience des nutriments, la tolérance aux stress abiotiques, et la qualité des cultures avec, dans le cas des nutriments notamment, pour effet direct ou indirect, la croissance de la plante, et donc l'amélioration du rendement.

Un second problème que se propose de résoudre l'invention est celui de mettre au point des compositions, qui soit capables de stimuler certains mécanismes naturels pour améliorer la tolérance aux stress biotiques.

Un troisième problème que se propose de résoudre l'invention est celui de mettre au point des compositions qui permettent de limiter la quantité appliquée de produits phytosanitaires tout en gardant le même effet que les doses standards. En d'autres termes, le troisième objectif est de mettre au point une composition qui puisse être utilisée comme adjuvant de composition phytosanitaire notamment.

La présente invention répond à l'ensemble de ces problèmes techniques. Plus précisément, le Demandeur a constaté que ces objectifs étaient atteints en combinant un tensioactif non ionique dérivé de polyols et un stérol ci-après désigné « la composition ou la composition de l'invention ».

Par conséquent, l'invention a tout d'abord pour objet l'utilisation d'au moins un tensioactif non ionique dérivé de polyols et un stérol comme biostimulant d'un végétal ci-après désigné « la composition ou la composition de l'invention ».

Comme premier effet contribuant à la biostimulation, la composition de l'invention est utilisée pour favoriser la germination.

Comme second effet contribuant à la biostimulation, la composition de l'invention est utilisée pour favoriser l'allongement des racines principales et la multiplication et l'allongement des racines secondaires, autrement dit la croissance des racines principales et secondaires.

Comme troisième effet contribuant à la biostimulation, la composition de l'invention est utilisée pour favoriser la floraison.

Comme troisième effet contribuant à la biostimulation, la composition de l'invention est utilisée pour favoriser la résistance des plantes contre des stress abiotiques.

En tant que produit améliorant la résistance au stress abiotique, la composition est utilisée notamment pour limiter la déperdition d'eau stomatique, c'est-à-dire pour permettre à la plante de mieux résister à un stress hydrique.

En tant que mécanisme de défense naturelle vis-à-vis d'un stress biotique, la composition de l'invention a un effet particulier sur l'activation du système de résistance systémique acquise. Dans certains cas et selon l'invention, la composition agit non seulement pour stimuler des mécanismes de défense naturelle contre des stress biotiques mais également pour favoriser la résistance à des stress abiotiques.

Le fait que la composition de l'invention ne soit pas un produit à activité spécifique permet d'envisager une utilisation à large spectre sur un grand nombre de cultures, ce qui peut sauver des cultures mineures pour lesquelles le nombre de produits phytosanitaires disponibles est quasi-nul.

Par ailleurs, le Demandeur a constaté que la composition de l'invention permettait d'améliorer l'étalement des liquides sur la feuille, en particulier d'une solution aqueuse. Ce phénomène résulterait de la diminution de la tension de surface de la feuille au contact de la composition de l'invention. Il s'ensuit qu'en améliorant l'étalement d'une solution contenant un produit actif vis-à-vis de la plante, on diminue la quantité nécessaire de produit pour un effet équivalent.

Cela présente donc un intérêt particulier vis-à-vis des produits phytosanitaires.

Par conséquent et selon un autre aspect, l'invention a également pour objet l'utilisation de la composition comme adjuvant d'une solution contenant un produit actif vis-à-vis de la plante.

Comme produit actif, on peut envisager notamment les nutriments, un ou plusieurs engrais, un ou plusieurs régulateurs de croissance et/ou avec un produit de biocontrôle. Les produits de biocontrôle visent à prévenir l'action d'organismes nuisibles pour les végétaux et sont choisis notamment parmi les fongicides, les fongistatiques, les bactéricides, les bactériostatiques, les insecticides, les acaricides, les parasiticides, les nématicides, les taupicides ou les répulsifs pour oiseaux ou gibiers, une ou plusieurs substances qui visent à détruire les végétaux indésirables ou à ralentir leur croissance choisie notamment parmi des herbicides ou des antidicotylédones.

La composition de l'invention constitue ainsi une économie pour l'agriculteur qui réduit le nombre d'applications (de passages au champ).

Avec son mode d'action indirect, le produit n'entraine pas de résistance. Qui plus est, l'utilisation éventuellement en alternance, mais surtout en association avec des produits phytosanitaires «classiques» (produit de biocontrôle) permet non seulement, comme déjà mentionné, de limiter la quantité de produit à appliquer mais également d'éviter ou de retarder l'apparition de résistances à ces produits et augmenter leur durabilité.

Lorsque la composition de l'invention est utilisée en association avec un produit actif vis-à-vis de la plante tel que décrit précédemment, elle l'est de façon simultanée ou séquentielle.

Ce type de synergie correspond en tous points aux demandes de la société en matière de produits phytosanitaires :

- Respect de l'environnement ;
- Absence de danger pour l'homme ;
- Faibles doses ;
- Large spectre d'utilisation ;
- Multiculture ;
- Pas de résistance induite ;
- Aide à retarder l'apparition de résistance aux produits phytosanitaires ;
- Diminution des intrants ;
- Amélioration des conditions environnementales ;

- Intérêt économique ;
- Intérêt règlementaire.

La composition selon l'invention peut être appliquée après l'émergence ou avant l'émergence, sur la graine, la plantule (stade juvénile antérieur à la floraison), la plante en cours de floraison (avant, pendant ou après pollinisation), la plante après fécondation, la plante en cours de fructification, le fruit, les fleurs, les feuilles, les tiges, les racines ou dans le sol, avant ou après semis.

La composition peut être en pratique appliquée par pulvérisation, arrosage, addition à un milieu de culture en hydroponie, immersion de la graine et/ou enrobage de la graine.

Il est possible de traiter des végétaux cultivés en plein champ ou des végétaux sous serre ou des végétaux cultivés en hors sol.

Selon l'invention, le végétal est choisi dans le groupe comprenant les Dicotylédones et les Monocotylédones, avantageusement dans le groupe comprenant les céréales, les plantes à racines et tubercules, les saccharifères, les légumineuses, les végétaux à fruits à coques, les plantes oléifères ou oléagineuses, les plantes de culture légumière, les fruitiers, les plantes aromatiques et les épices, les plantes de cultures florales, ou encore les plantes de culture industrielle destinée à la production d'une matière première en vue de sa transformation.

Selon une autre caractéristique de l'invention, le tensioactif non ionique dérivé de polyols est choisi dans le groupe comprenant les esters de sucre et d'acides gras, les alkyl-mono- et alkyl-poly-glucosides, les esters d'alkyl-mono- et alkyl-poly-glucosides et d'acides gras et les N-alkylglucamides, en particulier les N-methylglucamides.

Avantageusement, le tensioactif non ionique dérivé de polyols est choisi dans le groupe comprenant les esters de saccharose, les esters de sorbitan et les esters de glucose.

Selon un mode de réalisation particulier, le tensioactif non ionique dérivé de polyols est éthoxylé ou non éthoxylé.

De manière avantageuse, le tensioactif non ionique dérivé de polyols est le stéarate du saccharose.

Selon une autre caractéristique de l'invention, le stérol est choisi parmi le cholestérol, les stérols végétaux comme le campestérol, le béta-sitostérol, le stigmastérol, le brassicastérol, le campestanol, le sitostanol, les stérols animaux comme le lanostérol ou les stérols de levures ou champignons comme l'ergostérol.

Avantageusement, le stérol est le béta-sitostérol.

Selon un mode de réalisation particulier, le tensioactif non ionique dérivé de polyols et le stérol sont en solution, avantageusement sous la forme d'une solution aqueuse, comprenant 0.01% à 80%, de préférence 0.05% à 30%, de façon encore plus préférentielle 0.75% à 3% en poids de la solution de tensioactif non ionique dérivé de polyols et de stérol.

Avantageusement, l'utilisation selon l'invention d'au moins un tensioactif non ionique dérivé de polyols correspondant au stéarate du saccharose et le stérol correspondant au béta-sitostérol.

Selon un autre aspect, l'invention concerne une composition comprenant le stéarate de saccharose comme tensioactif non ionique dérivé des polyols et, en tant que stérol, au moins le béta-sitostérol ou le stigmastérol ou le cholestérol ou l'ergostérol ou leur mélange.

Avantageusement, le béta-sitostérol est compris entre 1 et 99 % en poids de la composition et le stéarate de saccharose est compris entre 99 et 1% en poids de la composition, de préférence le béta-sitostérol est compris entre 40 et 1 % et le stéarate de saccharose est compris entre 60 et 99 % en poids de la composition.

La manière dont l'invention peut être réalisée et les avantages qui en découlent ressortiront mieux des exemples de réalisation qui suivent, donnés à titre indicatif et non limitatif, à l'appui des figures annexées.

La figure 1 représente la comparaison du port de plants de persil après arrosage avec de l'eau ou une solution comprenant la combinaison de sucrose stéarate et de béta-sitostérol selon l'invention.

La figure 2 représente la quantification de l'acide salicylique dans des plants de persil 2, 4 ou 8 heures après arrosage avec de l'eau ou une solution comprenant la combinaison de sucrose stéarate et de béta-sitostérol selon l'invention.

Les figures 3 et 4 représentent l'effet d'une solution contrôle (eau ; C) ou d'une solution comprenant 1%, 3% ou 10% de la combinaison de sucrose stéarate et de béta-sitostérol selon l'invention (1%, 3% et 10%) sur la rupture des téguments de graines d'*Arabidopsis thaliana* cultivées en milieux stratifié (Figure 3) ou non stratifié (Figure 4).

Les figures 5 et 6 représentent l'effet d'une solution contrôle (eau ; C) ou d'une solution comprenant 1%, 3% ou 10% de la combinaison de sucrose stéarate et de béta-sitostérol selon l'invention (1%, 3% et 10%) sur l'émergence de la radicule de graines d'*Arabidopsis thaliana* cultivées en milieux stratifié (Figure 5) ou non stratifié (Figure 6).

Les figures 7 et 8 représentent l'effet d'une solution contrôle (eau ; C) ou d'une solution comprenant 1%, 3% ou 10% de la combinaison de sucrose stéarate et de béta-sitostérol selon l'invention (1%, 3% et 10%) sur l'ouverture des cotylédons de graines d'*Arabidopsis thaliana* cultivées en milieux stratifié (Figure 7) ou non stratifié (Figure 8).

La figure 9 représente les graines *d'Arabidopsis thaliana* germées 120 heures après traitement par de l'eau (A), une solution comprenant 1% (B) ou 10% (C) de la combinaison de sucrose stéarate et de béta-sitostérol selon l'invention.

La figure 10 représente la mesure de la longueur de la racine principale de plants *d'Arabidopsis thaliana* cultivés en l'absence de sucrose stéarate et de béta-sitostérol (0%) ou en présence de $10^{-5}$% ou $10^{-3}$% de sucrose stéarate et de béta-sitostérol en solution.

La figure 11 représente l'évaluation du système racinaire secondaire de plants *d'Arabidopsis thaliana* cultivés en l'absence de sucrose stéarate et de béta-sitostérol (0%) ou en présence de $10^{-5}$% ou $10^{-3}$% de sucrose stéarate et de béta-sitostérol en solution.

La figure 12 représente le temps de floraison de plants *d'Arabidopsis thaliana* traités avec des solutions comprenant 1, 3 et 10% du mélange sucrose stéarate et béta-sitostérol ou une solution contrôle (eau ; H2O) pulvérisés une fois (1%, 3% et 10%) ou deux fois à deux jours d'intervalle (1% 2X, 3% 2X et 10% 2X).

La figure 13 représente l'évolution de la déperdition en eau stomatique en fonction du temps de plants *d'Arabidopsis thaliana* traités avec de l'eau ou une solution comprenant le mélange sucrose stéarate et béta-sitostérol selon l'invention.

**Exemple 1 : Préparation de combinaisons d'un tensioactif non ionique et d'un stérol selon l'invention et évaluation de leur effet sur la résistance du persil (*Petroselinum crispum*) à un stress abiotique**

Différentes combinaisons de l'invention avec un stérol végétal sont préparées à partir de sucrose stéarate et de béta-sitostérol.

Les combinaisons sont préparées par mélange à sec de sucrose stéarate et de béta-sitostérol, avec des proportions variant de 0 à 100% en masse par rapport à la masse totale du mélange, pour chacun de ces ingrédients, comme indiqué dans le tableau 1 suivant.

Tableau 1

| Echantillon | Sucrose stéarate | Béta-sitostérol |
|---|---|---|
| A | 0 | 100 |
| B | 1 | 99 |
| C | 2.5 | 97.5 |
| D | 5 | 95 |
| E | 10 | 90 |
| F | 15 | 85 |
| G | 20 | 80 |
| H | 25 | 75 |
| I | 30 | 70 |
| J | 35 | 65 |
| K | 40 | 60 |
| L | 45 | 55 |
| M | 50 | 50 |
| N | 55 | 45 |
| O | 60 | 40 |
| P | 65 | 35 |
| O | 70 | 30 |
| R | 75 | 25 |
| S | 80 | 20 |

(suite)

| Echantillon | Sucrose stéarate | Béta-sitostérol |
|---|---|---|
| T | 85 | 15 |
| U | 90 | 10 |
| V | 95 | 5 |
| W | 97.5 | 2.5 |
| X | 99 | 1 |
| Y | 100 | 0 |

L'efficacité de chaque combinaison sur la tolérance des plantes au stress abiotique est analysée.

Des plants de persil en pot sont cultivés dans une enceinte climatique sous les conditions suivantes: 23°C et une photopériode de 16h de jour/8h de nuit. Avant le traitement l'ensemble des feuilles des plants de persil sont coupées. Le traitement des plants de persil consiste à arroser les pots tous les trois jours avec :

- 40 ml d'eau (lot Contrôle)

- 40 ml d'une solution composée d'un échantillon selon le tableau 1 (97% d'eau + 3% de l'échantillon)

Cet arrosage abondant a pour but de mimer un stress de type « inondation» (flooding).

Chaque lot est constitué de quatre pots.

Après 18 jours les plants sont observés et des clichés sont pris.

Tous les échantillons, excepté le béta sitostérol seul (échantillon A), présentent un effet positif sur la tolérance des végétaux au stress.

L'efficacité optimale, c'est-à-dire qui permet une meilleure résistance au stress abiotique («flooding») est obtenue avec

Les résultats montrent que l'échantillon S produit l'effet optimal de résistance de la plante au stress abiotique (échantillon S composé de 80% de stéarate de saccharose et 20% de béta-sitostérol).

On observe un port dressé dans plants traité alors que les plants contrôle ont un port tombant. De plus la coloration des feuilles des plants traités est plus foncée.

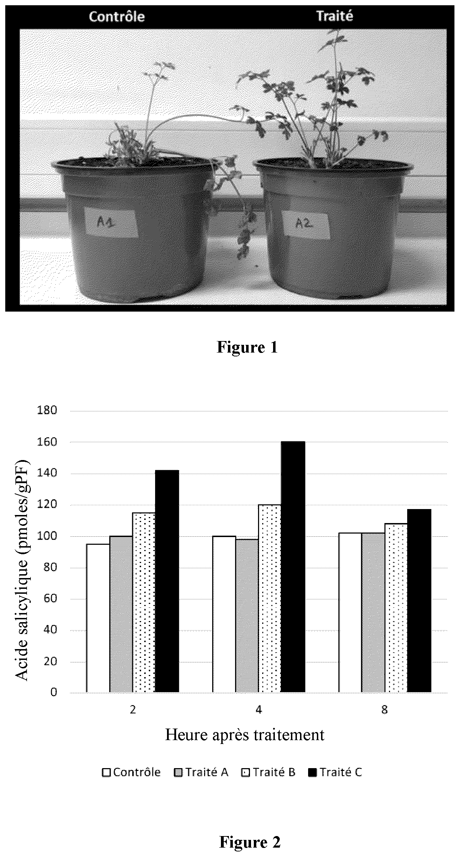

Les résultats sont présentés dans la figure 1.

L'application de l'invention par arrosage permet une meilleure tolérance au stress «flooding».

**Exemple 2 : Evaluation de l'effet d'un tensioactif non anionique et d'un stérol selon l'invention sur la synthèse d'acide salicylique du persil**

L'acide salicylique est un composé phénolique qui est impliqué à la fois dans la mise en place d'une résistance locale et d'une résistance générale (SAR) chez les plantes.

Des plants de persil en pot sont cultivés selon les conditions de l'exemple 1.

L'application des solutions se fait par un arrosage au pied du végétal (40 ml) et une pulvérisation sur les feuilles. Les solutions testées sont :

- Lot Contrôle : eau ;

- lot traité A : solution composée de 97% d'eau et de 3% de l'échantillon A, soit 0% de sucrose stéarate et 100% de béta-sitostérol ;

- lot traité B : solution composée de 97% d'eau et de 3% de l'échantillon Y, 100% de sucrose stéarate et 0% de béta-sitostérol ;

- lot traité C : solution composée de 97% d'eau et de 3% de l'échantillon S, soit 80% de sucrose stéarate et 20% de béta-sitostérol.

Chaque lot est constitué de quatre pots.

Les plantes récoltées après l'application du traitement ont été congelées et broyées avec de l'azote liquide pour réaliser une analyse quantitative de la teneur en acide salycilique contenue dans les plantes.

Les résultats sont présentés dans la figure 2.

On observe, de manière inattendue, que la combinaison de sucrose stéarate et de béta-sitostérol (échantillon S) induit une stimulation de la synthèse de l'acide salicylique supérieure à l'addition des effets de chaque composé pris individuellement (échantillon A : béta-sitostérol + échantillon Y : sucrose stéarate), en réponse à un stress biotique.

Ces résultats démontrent donc une synergie d'action de ces deux molécules.

**Exemple 3 : Evaluation de l'effet d'un tensioactif non anionique et d'un stérol selon l'invention sur la germination de graines *d'Arabidopsis thaliana***

Des graines *d'Arabidopsis thaliana* sont placées dans une enceinte climatique sous une photopériode de 16h de jour /8h de nuit, à 22°C. Les graines ont été imbibées avec de l'eau (contrôle) ou avec la composition selon l'invention à des concentrations de 1%, 3% et 10% dans l'eau. Les graines ont été préalablement stratifiées (c'est-à dire exposées au froid) ou non stratifiées.

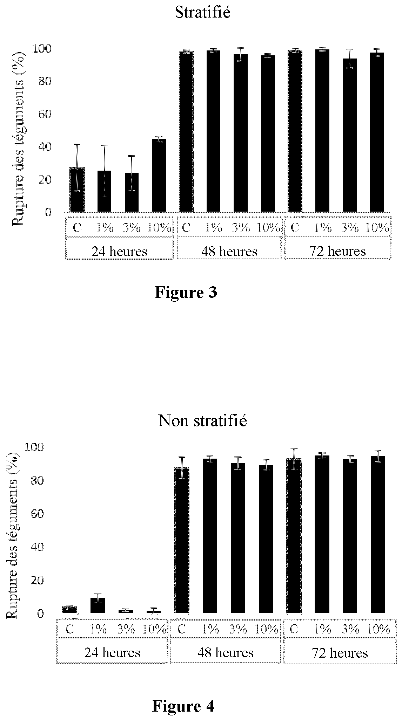

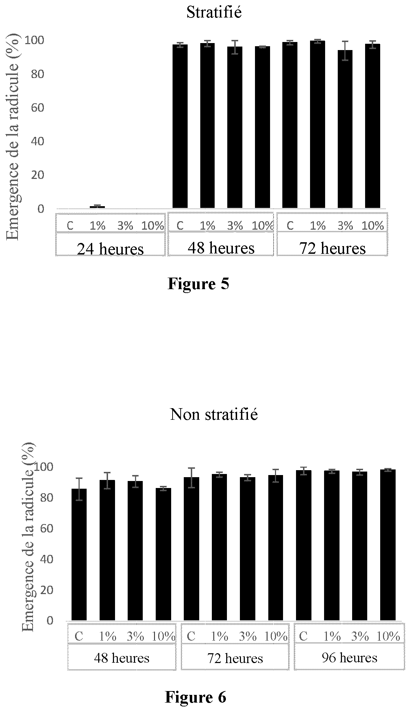

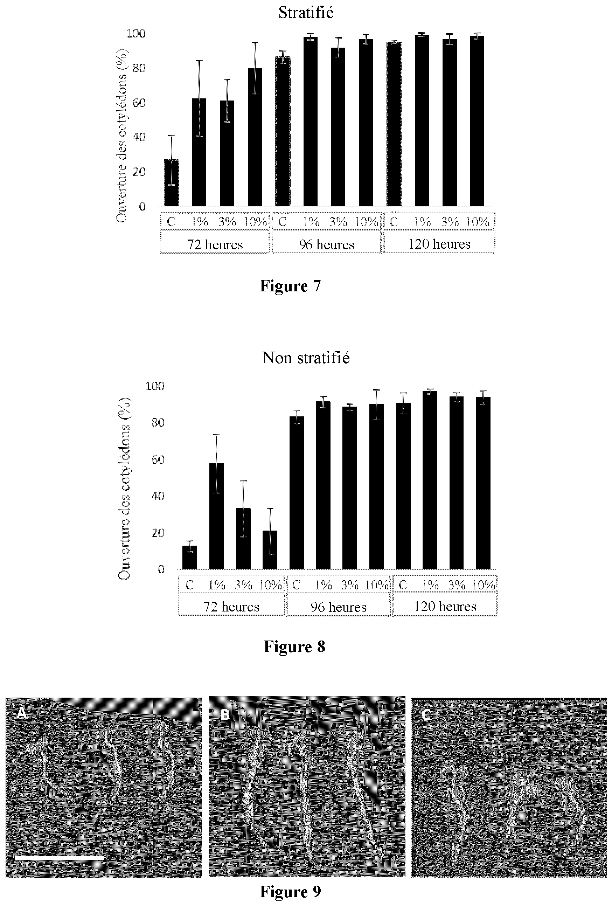

Différentes étapes de la germination sont observées en fonction du temps : la rupture des téguments (Figures 3 et 4), l'émergence de la radicule (Figure 5 et 6) et l'ouverture des cotylédons (Figures 7 et 8).

Les résultats montrent que l'imbibition des graines avec le mélange de sucrose stéarate et de béta-sitostérol, permet d'accélérer la germination des graines *d'Arabidospis thaliana*. Ces résultats sont illustrés par la figure 9 qui représente la germination de ces graines 120 heures après l'imbibition.

**Exemple 4 : Evaluation de l'effet d'un tensioactif non anionique et d'un stérol selon l'invention sur la croissance racinaire *d'Arabidopsis thaliana***

Des plants *d'Arabidopsis thaliana* sont cultivés sur milieu gélosé dans une enceinte climatique sous les conditions suivantes: 23°C et une photopériode de 16h de jour /8h de nuit.

Un milieu gélosé standard est utilisé comme contrôle.

Des milieux gélosés contenant $10^{-5}$% et $10^{-3}$% du mélange sucrose stéarate et béta-sitostérol selon l'échantillon S sont mis en œuvre pour évaluer l'effet de l'invention sur le développement du système racinaire.

La longueur de la racine principale et des racines secondaires est mesurée entre le 2ème et le 21ème jour post germination.

La quantité de racines secondaires est évaluée visuellement.

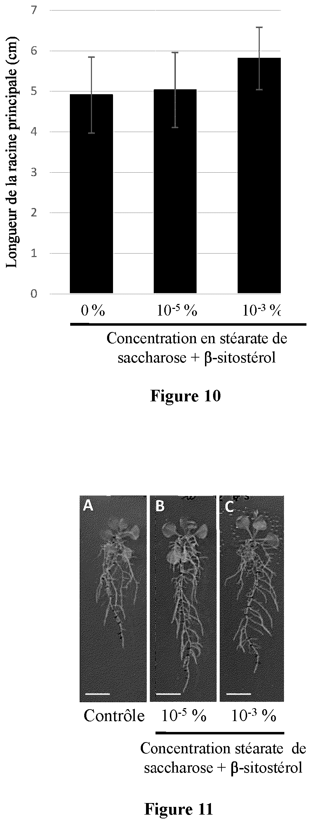

Les résultats sont représentés par les figures 10 et 11.

La figure 10 montre que la racine principale des plantes cultivées en présence de $10^{-5}$% et $10^{-3}$% du mélange selon l'invention est plus longue que pour les plantes cultivées en milieu gélosé contrôle.

La figure 11 montre que les plantes cultivées en milieux gélosés comprenant $10^{-5}$% et $10^{-3}$% du mélange selon l'invention ont plus de racines secondaires qui sont également plus longue.

Il résulte de cette démonstration que le mélange sucrose stéarate et béta-sitostérol permet une croissance du système racinaire principal et secondaire. En conséquence, la plante est mieux ancrée dans le sol et la pénétration des nutriments dans la plante est plus efficace en raison du réseau racinaire secondaire plus développé.

**Exemple 5 : Evaluation de l'effet d'un tensioactif non anionique et d'un stérol selon l'invention sur le temps de floraison *d'Arabidopsis thaliana***

Des plants *d'Arabidopsis thaliana* en pot sont cultivés selon les conditions de l'exemple 1.

Des solutions comprenant 1, 3 et 10% du mélange sucrose stéarate et béta-sitostérol selon l'échantillon S ou une solution contrôle (eau ; H2O) sont pulvérisés une fois (1%, 3% et 10%) ou deux fois à deux jours d'intervalle (1% 2X, 3% 2X et 10% 2X), sur des plantes âgées de 3 semaines.

Le nombre de plantes fleuries par modalités a été mesuré en fonction du temps.

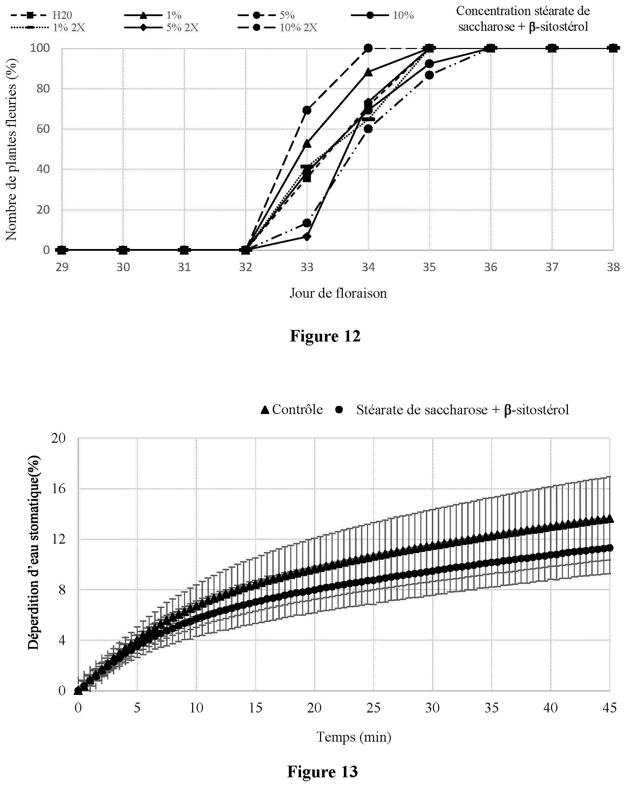

Les résultats sont représentés par la figure 12.

Les résultats montrent que la solution contenant 10% du mélange selon l'invention et pulvérisé une fois, de même que la solution comprenant 1% du mélange et pulvérisé deux fois, ont la même efficacité que l'eau sur la floraison des plantes.

En revanche, une seule pulvérisation sur les plantes des solutions comprenant 1% ou 5% du mélange augmente le nombre de plantes fleuries par rapport au contrôle.

En conséquence, le mélange sucrose stéarate et béta-sitostérol selon l'invention accélère la floraison *d'Arabidopsis thaliana*.

**Exemple 6 : Evaluation de l'effet d'un tensioactif non anionique et d'un stérol selon l'invention sur la déperdition d'eau stomatique *d'Arabidopsis thaliana***

Des plants *d'Arabidopsis thaliana* en pot sont cultivés selon les conditions de l'exemple 1.

Les plantes, âgées de 4 semaines, sont traitées par une pulvérisation foliaire, 4 heures avant que les mesures soient effectuées, avec de l'eau (Contrôle) ou une solution comprenant 3% du mélange sucrose stéarate et béta-sitostérol selon l'échantillon S.

La quantité d'eau perdue par les stomates au cours du temps est mesurée après détachement de la rosette par rapport à la masse d'eau totale à t=0, selon la formule suivante :

$$\text{Perte (\%)} = \frac{masse\ fraiche\ t = 0 - masse\ t = T}{masse\ fraiche\ t = 0 - masse\ sèche} x100$$

Les résultats sont représentés par la figure 13.

Les données montrent que l'application par pulvérisation de sucrose stéarate et béta-sitostérol selon l'invention permet de diminuer la déperdition d'eau par les stomates de la plante de façon efficace et durable dans le temps.

**Exemple 7 : Evaluation de l'effet mouillant d'un tensioactif non anionique et d'un stérol selon l'invention sur *Arabidopsis thaliana***

Des plants *d'Arabidopsis thaliana* en pot sont cultivés selon les conditions de l'exemple 1.

Les feuilles *d'Arabidopsis thaliana* sont traitées par une pulvérisation foliaire, avec de l'eau (Contrôle) ou une solution comprenant 3% du mélange sucrose stéarate et béta-sitostérol selon l'échantillon S.

Le nombre de gouttelettes présentes sur la surface de la feuille de la plante est quantifié.

Les résultats montrent une diminution du nombre de gouttelettes sur la feuille *d'Arabidopsis thaliana* après application du mélange selon l'invention. En d'autres termes, la composition selon l'invention permet de réduire la tension de surface de la solution pulvérisée sur les feuilles et donc permet un meilleur étalement des gouttelettes et une meilleure adhésion de la solution sur la feuille.

En outre, les résultats montrent qu'il n'y a pas d'accumulation de la solution comprenant le mélange sucrose stéarate et béta-sitostérol selon l'invention au niveau des nervures et des bourgeons axillaires de la plante.

En conséquence, le mélange du sucrose stéarate et du béta-sitostérol selon l'invention permet notamment de traiter les graminées connues pour être peu mouillables.

Un autre intérêt est l'utilisation de ce mélange en tant qu'adjuvant pour les produits qui ont une action de contact.

Par ailleurs, l'utilisation du mélange selon l'invention permet d'augmenter la couverture de la plante et d'utiliser moins de produit à l'hectare.

**Revendications**

**1.** Utilisation d'au moins un tensioactif non ionique dérivé de polyols et d'au moins un stérol, en tant qu'adjuvant d'une solution contenant un produit actif vis-à-vis de la plante, **caractérisée en ce que** :

   - le produit actif est un produit de biocontrôle ;
   - le au moins un tensioactif non ionique dérivé de polyols est choisi parmi les esters de saccharose ; et
   - le au moins un stérol est choisi parmi le campestérol, le béta-sitostérol, le stigmastérol, le brassicastérol, le campestanol, le sitostanol et le cholestérol.

**2.** Utilisation selon la revendication 1, **caractérisée en ce que** le produit de biocontrôle est choisi parmi les fongicides et les fongistatiques.

**3.** Utilisation selon la revendication 1 ou 2, **caractérisée en ce que** ledit au moins un tensioactif non ionique dérivé de polyols et ledit au moins un stérol est appliquée sur la plantule (stade juvénile antérieur à la floraison).

**4.** Utilisation selon l'une quelconque des revendications 1 à 3, **caractérisée en ce que** la plante est choisie dans le groupe comprenant les céréales, les plantes à racines et tubercules, les saccharifères, les légumineuses, les végétaux à fruits à coques, les plantes oléifères ou oléagineuses, les plantes de culture légumière, les fruitiers, les plantes aromatiques et les épices, les plantes de cultures florales, ou encore les plantes de culture industrielle destinée à la production d'une matière première en vue de sa transformation.

5. Utilisation selon l'une quelconque des revendications 1 à 4, **caractérisée en ce que** la plante est une céréale.

6. Utilisation selon l'une quelconque des revendications 1 à 5, **caractérisée en ce que** ledit au moins un tensioactif non ionique dérivé de polyols est le stéarate de saccharose.

7. Utilisation selon l'une quelconque des revendications 1 à 6, **caractérisée en ce que** ledit au moins un stérol est le béta-sitostérol.

8. Utilisation selon l'une quelconque des revendications 1 à 7, **caractérisée en ce que** ledit au moins un tensioactif non ionique dérivé de polyols et ledit au moins un stérol sont en solution, avantageusement en solution aqueuse, et représentent 0,01% à 80% en poids de ladite solution aqueuse.

9. Utilisation selon la revendication 8, **caractérisée en ce que** ledit au moins un stérol est le béta-sitostérol et est compris entre 1 et 99 % en poids de la solution et le au moins un tensioactif non ionique dérivé de polyols est le stéarate de saccharose et est compris entre 99 et 1 % en poids de la solution, de préférence le béta-sitostérol est compris entre 40 et 1 % et le stéarate de saccharose est compris entre 60 et 99 % en poids de la solution.

10. Utilisation selon l'une quelconque des revendications 1 à 9, **caractérisée en ce que** ledit au moins un tensioactif non ionique dérivé de polyols et ledit au moins un stérol, ou la solution les comprenant, sont appliqués par pulvérisation.

11. Utilisation selon l'une quelconque des revendications 1 à 10, **caractérisée en ce que** ledit au moins un tensioactif non ionique dérivé de polyols et ledit au moins un stérol ainsi que le produit actif vis-à-vis de la plante sont utilisés de façon simultanée.

12. Utilisation selon l'une quelconque des revendications 1 à 11, **caractérisée en ce que** le nombre d'application du produit actif vis-à-vis de la plante est réduit par rapport à une condition non traité avec ledit au moins un tensioactif non ionique dérivé de polyols et ledit au moins un stérol.

13. Utilisation selon l'une quelconque des revendications 1 à 11, **caractérisée en ce que** la quantité nécessaire de produit actif est diminuée pour un effet équivalent à une condition non traité avec ledit au moins un tensioactif non ionique dérivé de polyols et ledit au moins un stérol.

14. Solution pour application d'un produit actif vis-à-vis de la plante, comprenant :

   - un produit de biocontrôle ;
   - au moins un tensioactif non ionique dérivé de polyols choisi parmi les esters de saccharose ; et
   - au moins un stérol sélectionné dans le groupe constitué par le campestérol, le béta-sitostérol, le stigmastérol, le brassicastérol, le campestanol, le sitostanol et le cholestérol.

15. Solution selon la revendication 14, **caractérisée en ce que** le au moins un stérol est le béta-sitostérol et est compris entre 1 et 99 % en poids de la solution et le au moins un tensioactif non ionique dérivé de polyols est le stéarate de saccharose et est compris entre 99 et 1 % en poids de la solution, de préférence le béta-sitostérol est compris entre 40 et 1 % et le stéarate de saccharose est compris entre 60 et 99 % en poids de la solution.

**Figure 1**

**Figure 2**

## Stratifié

**Figure 3**

## Non stratifié

**Figure 4**

Stratifié

**Figure 5**

Non stratifié

**Figure 6**

Stratifié

**Figure 7**

Non stratifié

**Figure 8**

**Figure 9**

Figure 10

Figure 11

Figure 12

Figure 13